# EUROPEAN PATENT SPECIFICATION

(11) **EP 2 049 365 B1**
(45) Date of publication and mention of the grant of the patent: **13.12.2017**
(21) Application number: 07813651.2
(22) Date of filing: 01.08.2007
(51) Int. Cl.: F21S 8/10, F21V 8/00, B32B 17/10, B60Q 3/208, B60Q 3/64, B60Q 3/74, B60Q 3/54

(54) **ILLUMINATION DEVICE**
BELEUCHTUNGSVORRICHTUNG
DISPOSITIF D'ÉCLAIRAGE

(30) Priority: 01.08.2006 US 821066 P
(43) Date of publication of application: 22.04.2009
(73) Proprietor: 3M Innovative Properties Company, St. Paul, MN 55133-3427 (US)
(72) Inventor: WOLLNER, Mark, R., Saint Paul, MN 55133-3427 (US); WEDELL, Jacquelyn, A., Saint Paul, MN 55133-3427 (US); LIU, Junkang, J., Saint Paul, MN 55133-3427 (US); SHIPMAN, Rebecca, A., Saint Paul, MN 55133-3427 (US); MEIS, Michael, A., Saint Paul, MN 55133-3427 (US); HENSON, Gordon, D., Saint Paul, MN 55133-3427 (US); STYCH, Dean, J., Saint Paul, MN 55133-3427 (US); LEE, Nicholas, A., Saint Paul, MN 55133-3427 (US)
(74) Representative: Vossius & Partner Patentanwälte Rechtsanwälte mbB
(86) International application number: PCT/US2007/074978
(87) International publication number: WO 2008/016978

(56) References cited:
- EP-A1- 1 609 680
- EP-A1- 1 663 712
- WO-A1-94/10590
- WO-A1-2004/024510
- WO-A1-2005/024479
- DE-U1- 20 205 110
- JP-A- H0 789 386
- JP-A- S5 911 934
- JP-A- 03 217 349
- JP-A- 2000 127 847
- JP-A- 2004 256 035
- KR-Y1- 200 347 643
- US-A- 6 044 196
- US-A1- 2002 172 039
- US-B1- 6 347 874
- US-B2- 6 592 234
- US-B2- 6 592 234

## Description

### Technical Field

The present invention is generally directed to illumination devices, and particularly directed to illumination devices which utilize unique cover materials.

### Background

Light fixtures are used to provide illumination to a broad range of surfaces or spaces. Examples of known light fixtures include dome lights in vehicles, lights affixed to the interior or exterior of a home or building, and lights affixed to an appliance or tool. Many light fixtures used for these applicants utilize bulky housings containing light bulbs and reflectors. Further, many light fixtures provide direct illumination where the light source emits light directly toward the targeted area, which may cause undesired glare on illuminated surfaces or to the user.

### Summary

The present disclosure is directed to an illumination device for the interior lighting of a vehicle as defined in independent claim 1, comprising:
a. at least one light source,
b. at least one light management device comprising a front light guide having at least one light input face through which light from the source can be supplied to the light guide, a light directing face, and a light output face opposite the light directing face, the light output face having a light extraction layer thereon, the light extraction layer having a light exit face and containing buried reflective facets that extract supplied light from the light guide through the light output face,
c. a cover operatively adapted (i.e., dimensioned and designed) to form a portion of the interior surface a vehicle, wherein the cover is arranged to cover the light exit face and to be illuminated by and to transmit light received from the light source, and
d. a brightness enhancement film disposed between the light exit face and the cover for redirecting and recycling light to increase a brightness of light exiting the illumination device.

### Brief Description of the Drawings

FIG. 1 is a side view of an illumination device in an embodiment not according to the invention.
FIG. 2 is a side view of an illumination device in an embodiment not according to the invention.
FIG. 3 is an exploded side view of an illumination device in an embodiment of the invention.
FIG. 4 is a perspective view of an illumination device in a embodiment not according to the invention.

### Detailed Description

In one embodiment, the present disclosure is directed to illumination devices for vehicles wherein the light source illuminates a cover that blends in with a surface of the vehicle (e.g., an interior surfaces). These surfaces can include but are not limited to surfaces that are or have the appearance of metal, fabric, plastic (e.g., vinyl), leather, synthetic leather, wood, paint, or other typical vehicle interior surfaces. Such surfaces can also be or have the appearance of being metal, fabric, plastic (e.g., vinyl), synthetic leather, wood or painted surfaces. Such surfaces can also have the appearance of being (e.g., being faux) or can be metal, fabric, plastic (e.g., vinyl), leather, synthetic leather, wood, paper (e.g., wall paper, paper used in drywall, etc.), paint, stucco, brick, slate, tile, siding, plaster, marble, granite, concrete or other such surfaces. In some embodiment, when the light source is turned on, the cover material is no longer visible.

In other embodiments, the cover of the illumination device may appear transparent, translucent, or reflective. The cover materials described herein may have one appearance (e.g., a mirror) when the light is off, while also allowing light from the source to permeate through when the light is turned on. The light from the hidden light source can be made to permeate through the cover using a variety of mechanisms. These mechanisms can vary based on the makeup of the covers as well as the desired characteristics of the output light.

The lighting devices disclosed herein provide illumination for the interior or exterior of vehicles and are thin, efficient, evenly illuminating and aesthetically attractive.

When terms such as "above", "upper", "atop", "upward", "beneath", "below", "lower" and "downward" are used in this application to describe the location or orientation of components in an illumination device, these terms are used merely for purposes of convenience and assuming that the viewing face of the illumination device is horizontal and is viewed from above. These terms are not meant to imply any required orientation for the completed illumination device or for the path taken by supplied or ambient light in actual use of the completed device.

As used herein, the term "vehicle" is defined broadly as a means of carrying or transporting something. Types of vehicles which may utilize the illumination devices disclosed herein include, by way of non-limiting example, automobiles, trucks, buses, trains, recreational vehicles, boats, aircraft, motorcycles, and the like.

As used herein, the term "light source" means any light generating source, including, by way of non-limiting example, LEDs, fluorescent or incandescent lamps, electroluminescent lights, and the like. A light source could also take the form of the illumination devices, as described herein. Preferably, the light source is powerful enough (i.e., produces enough lumens or candlelight) to enable the illumination device to sufficiently illuminate an area of interest so as to meet or exceed the applicable illumination standards associated with the desired use of the illumination device (e.g., in order to function as an overhead light, a map light or a glove box light in the interior of a vehicle; or as a security light or flood light on the exterior of a building; as a reading light; etc.).

As used herein, the term "light management device" means any material or device that alters the properties of visible light. Non-limiting examples of such properties include reflection, refraction, dispersion, diffraction, interference, and the like.
As used herein the term "light guide" or "light turning plate" means a material capable of guiding a flow or propagation of light by means of reflection. Light guides and light turning plates are specific types of light management devices.

As used herein, the term "cover" refers to a material used to partially or completely cover the illumination devices described herein. The covers may be made of a wide variety of materials designed to permit at least a portion of the light to penetrate through the surfaces of the material. In some embodiments covers are made of materials similar to the surrounding environment of the illumination device to create a hidden light source,

The term "transparent" as used herein is generally meant that an article allows light to pass through it without substantial portions of light being absorbed. Accordingly, transparent materials in connection with the present disclosure can be optically clear and have and have a visible light transmission in the range of from about 70% up to and including about 100%.

The term "translucent", as used herein, means that an article has a visible light transmission in the range of from about 30% to less than about 70%.

The term "glazing" as used herein, refers to transparent or translucent panels or panes that allow light to pass into or out of a vehicle, building or other structure, such as a window, front or rear windshield, sky light, sunroof, and the like. Conventional materials, such as glass and plastic, can be used in the construction of the transparent and translucent panels.

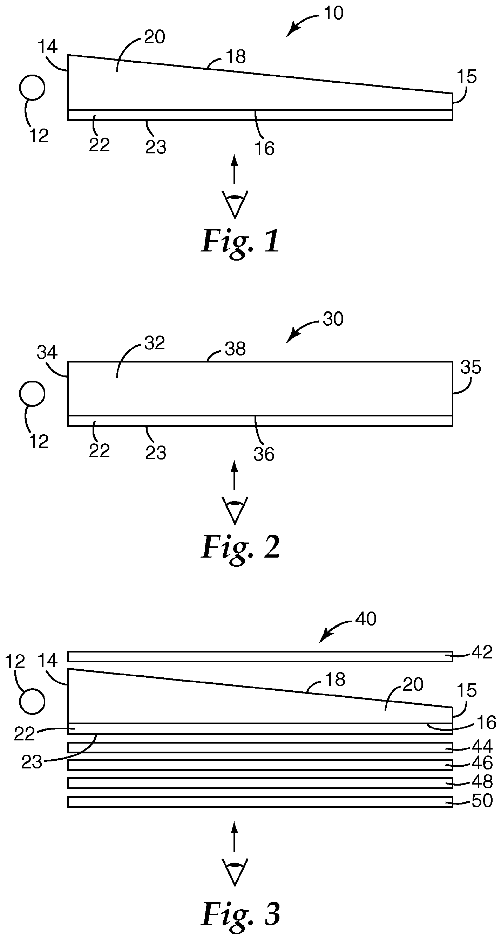

Referring now to the drawings, FIG 1. illustrates an illumination device 10 in an embodiment of the present disclosure. The illumination device 10 includes a light source 12, a light guide 20 having an input face 14, an output face 16 and a light directing face 18. In the embodiment depicted in FIG.1, light guide 20, is in the form of a wedge that decreases in thickness from light input face 14 toward end 15. As described below, the light guide need not be made as a wedge, and in some embodiments will have a relatively constant thickness. An optically transparent adhesive (not shown) fastens a structured light extraction layer 22 to light output face 16 of light guide 20.

Due to the inclusion of the light extraction layer 22, the light guides described herein are capable of reflecting light in a direction that is normal or near normal with respect to a plane parallel to the output face 16, of the light guide 20. Light extraction layer 22, has a light exit face 23 and an upper surface opposite the light exit face having a plurality of projections (not shown). Those skilled in the art will appreciate that additional antireflection coating layers or other light management devices or features can be applied to exit face 23, so long as care is taken preserve the substantially flat topography of exit face 23 and to avoid introduction of undesirable distortions in the viewed image. For further discussion of the light extraction layer, see U.S. Patent No. 6,592,234.

FIG. 2 shows an illumination device 30 in a further embodiment of the present disclosure. Light guide 32, has a light input face 34, a light output face 36, a light directing face 38, and an extraction layer 22. Unlike the generally tapered light guide of FIG. 1, light guide 32 has a generally planar shape, and is shown to have relatively constant thickness from the light input face 34 toward end 35.

In operation, light provided by the light source 12, passes through the light guide 20, 32 and is reflected by the surface of the corresponding light directing face 18, 38 to the output face 16, 36. Alternatively, light could be confined within the light guide 20, 32 by manipulating the incident angle of the light, or utilizing cladding materials or further light management devices having a low refractive index. Further, when one or more surfaces of the light guide is structurally embossed, or optically designed, for example, with a differential refractive index patterned coating, light can be uniformly extracted from one surface of the light guide. Light guides suitable for use in the illumination devices described herein are disclosed in U.S. Patent Numbers 6,738,051, 6,663,262, 6,592,234, 6,576,887.

Turning now to FIG. 3, a further embodiment of an illumination device is shown having a light source 12, a front light guide 20 having a light input face 14, a light output face 16 and a light directing face 18. The illumination device in this embodiment additionally contains a reflector material 42. The reflector 42 imparts various qualities to the light, such as color or reflective properties. Reflector materials 42 may be a mirror films, opaque films, or other materials capable of light reflection. An example of such a film is Vikuiti™ Enhanced Specular Reflector (ESR) film available from 3M Company, St. Paul MN. The ESR film is a non-metallic, highly reflective mirror film.

The embodiment shown in FIG. 3 further contains a diffuser film 44, placed atop the light guide 20. Diffuser film 44 is effective in evenly distributing the light reflected from the light guide. The illumination device of FIG. 3 further contains two layers of a brightness enhancement film 46, 48 placed atop the diffuser film 44. Brightness enhancement films function to redirect and recycle light to increase the brightness of the light from the illumination device. In some embodiments, layers of brightness enhancement film 46, 48, may be placed in an orthogonal relationship.

The illumination device in the embodiment of FIG. 3 further contains a cover 50, placed atop the layers of brightness enhancement film 46, 48. Cover 50 may be comprised of a wide variety of materials. In some embodiments, the cover 50 has the appearance of, or is made of the same material used to, fabricate a portion of the vehicle surface (e.g., interior surface), such that when the light source of the illumination device is turned off, the illumination device blends into or becomes less distinguishable from the surrounding surface of the vehicle.

In some embodiments, the cover 50 may be made of metallic material (e.g., elemental metal, metal alloy or metal compound), metallic film (e.g., a metallic coated polymeric film), or a material or film with a metallic appearance. If such a material is used, the thickness of the metal may be controlled to provide appropriate light reflection and light transmission. In some cases, perforations may be made in the material in order to allow light to pass through the material or, in the case of a material that already allows light transmission, a higher light transmission. The perforations can be made by any suitable technique, which may include laser or flame ablation, mechanical perforation, or chemical etching. In some embodiments, the cover 50 can be made with a metallic looking or mirror-like film that is non-metallic. These films can be made to selectively reflect and transmit light based on the wavelength of the light impinging upon them. In a preferred embodiment, a multilayer interference film can be used to make such a metallic looking or mirror-like film, where the film has high reflectivity and high transmission through light recycling. Such multilayer interference films can be found in U.S. Patents Nos. 6,080,467 and 5,882,774.

Cover 50 may further be made of a fabric or textile material, thus enabling the illumination device to blend in with a vehicle interior surface covered in fabric, such as the headliner, seatbelt, seat or other fabric or textile surface of a vehicle. For fabric or textile covers 50, applications that illuminate the cloth trim, seats, speaker covers, headliners, textile wall or ceiling panels, safety belts, head rests, arm rests, and even carpet or floor mats can make a vehicle more safe and convenient to operate and improve the occupant experience.

A cover 50 with a fabric or textile appearance can be made light permeable by making the weave of the textile loose enough to permit the light to pass between the fibers of the fabric or textile. A cover with a fabric or textile appearance can also be made light permeable by perforating the cover material via laser or flame ablation, mechanical perforation, or chemical etching. These perforations allow light to permeate through an otherwise opaque membrane. A cover 50 with a fabric or textile appearance can also be made to illuminate by incorporating optical fibers within the weave of the textile. When illuminated, these fibers then emit light along their length and illuminate the textile.

A cover with a colored, painted, printed or patterned appearance can be made light permeable for example, by perforating the appearance forming portion of the cover, or through the use of translucent or transparent substrates and pigments. Such covers could be fabricated with, for example, wood grain, faux wood grain, leather, synthetic leather, polymer, vinyl or other natural or artificial material used in the interior of vehicles.

The illumination devices described herein may be used in any location on the interior of a vehicle where decorative or functional elements (e.g., colored, painted or patterned elements) are employed that could benefit from the increased conspicuity or decorative appeal that internal illumination can provide.

As one skilled in the art would appreciate, the illumination devices described herein could also be used to illuminate surfaces on the exterior of a vehicle, or in other applications where it is desired to conceal the illumination device. For example, one could use the illumination devices described herein as safety lights under a carpet or tile surface, on or along stairs, or on a wall panel made of wood or other material, or as part or all of a mirror. Illumination devices described herein could also be used, for example, as a signal light (e.g., a stop or turn signal light) on the exterior surface of a vehicle. Examples of further applications for the illumination devices described include the exterior surface of a building or other structure or mobile objects such as an appliance or furniture.

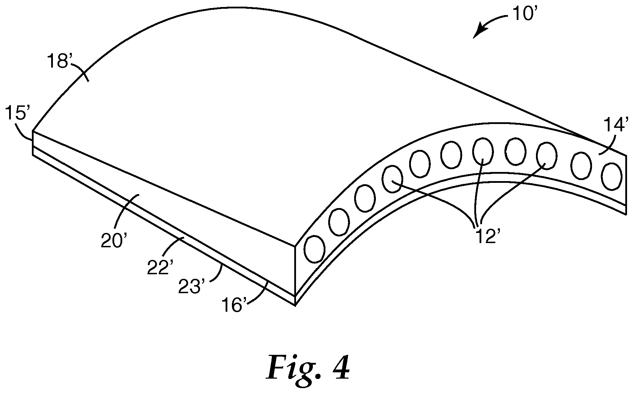

While the illumination devices depicted in the figures show the devices as substantially planar articles, it should be appreciated that the devices may be constructed to form curved surfaces (e.g., circular, oval or other arcuate structures). For example, referring to the illumination device 10 of Fig. 1, the light guide 20 could be formed so as to curve along a lateral or longitudinal axis. Such an alternative embodiment is shown in Fig. 4. In this embodiment, the light source 12' is modified to better provide light to the curved input face 14' of the light guide 20'. For example, the light source 12' could take the form of a series of LEDs or other individual light sources aligned along the curved light input face 14'. Alternatively, a single curved light source may be used (e.g., a curved light pipe).

In other embodiments, the light guide 20 could be formed into a cylindrical, oval or other arcuate shape with the light source 12 modified to provide light along the input face 14. As one skilled in the art will appreciate, the light guide may be configured in various ways to provide illumination devices for a number of applications.

The light guides described herein could be made to be transparent or translucent, to allow ambient light to pass through the light guide.

The optical qualities of the illumination devices described herein, may be further enhanced by the use of additional light management devices. Suitable light management devices for use in the illumination devices described herein include, light control films for glare and reflection management, prismatic brightness enhancement films, diffuser films, reflective films, reflective polarizer brightness enhancement films, and turning films.

Optionally, a protection layer could be placed on the top surface of the light output face 16 to improve surface durability and reduce surface reflection of the illumination device 10, 30. Those skilled in the art will appreciate that the protection layer could additionally comprise a hard coating, smudge resistant coating, or an antireflection coating. The protection layer may also provide weathering resistant features through UV resistant coatings or UV stabilizers.

Further, the light guides as described herein could be coupled with one or more light management devices to produce, for example, an illuminated reflective surface, such as an illuminated mirror. As a further example, a light management device could be used on the end surfaces 15, 35 to prevent light leakage out of the device.

The light guides described herein can have any desired overall size and thickness, and in some embodiments, are relatively thin, e.g., 5 mm or less. The light guide can be wedge-shaped, rectangular, oval or any other desired shape. The size and shape of the light guide usually will be dictated by the size and shape of the desired illumination device. In some embodiments, light guide thickness ranges from about 0.1 to about 5 mm, and in other embodiments, from about 1 to about 2 mm.

The light guides can be fabricated from a wide variety of optically suitable materials including glass; polycarbonate; polyacrylates such as polymethyl methacrylate; and polystyrene. The light input face and viewing face of the light guide can each be generally planar or can have a convex or concave curvature. When the light source is a point or line source, the light input face may be provided with a convex curvature, lenslets, prisms, a roughened surface or other features in order to distribute the incoming light more evenly. The light directing face preferably has an optically smooth finish, in order to minimize transmission losses, undesired scattering and distortion.

Reflector materials 42 suitable for use in the illumination devices described herein are described in the following U.S. patents: 5,094,788, 5,122,905, 5,269,995, 5,389,324, 5,882,774, 5,976,424, 6,080,467, 6,088,163, 6,101,032, 6,117,530, 6,157,490, 6,208,466, 6,210,785, 6,296,927.

Suitable diffuser films 44 are described in the following U.S. Patents: 5,217,794, 5,528,720, 5,751,388, 5,783,120, 5,825,542, 5,825,543, 5,867,316, 5,991,077, 5,999,239, 6,005,713, 6,025,897, 6,031,665, 6,057,961, 6,111,696, 6,141,149, 6,179,948, 6,256,146. As would be appreciated by one skilled any the art, any number of light management devices may be appropriate for use in the illumination devices described herein, such as the light management devices described above.

Suitable brightness enhancement films 46, 48 are described in the following U.S. Patents: 4,542,449, 4,791,540, 4,799,131, 4,883,341, 4,984,144, 5,056,892, 5,161,041, 5,175,030, 5,183,597, 5,626,800, 5,771,328, 5,828,488, 5,858,139, 5,908,874, 5,917,664, 5,919,551, 6,025,897, 6,052,164, 6,091,547, 6,280,063.

As discussed above, cover 50 may be made of a variety of materials. In some embodiments, the cover is made from a transparent or translucent material. Additionally, cover 50 may be made of any of the light management devices described herein.

Further, films described in the following U.S. patents and patent applications may be used as a light management device or cover 50 for the illumination devices described herein. Such films are available from the 3M Company under the trade designation Accentrim™ and are covered by one or more of the following U.S. patents and patent applications: 3,908,056; 5,840,407; US 2004157031; 6,773,537; 6,805,932; 6,571,849; 6,634,401; 6,700,712.

As would be appreciated by one skilled any the art, any number of optical devices or films may be appropriate for use in the illumination devices described herein, such as the light management devices described above. Further, it should be appreciated that any combination of light guides and light management devices as described above may be appropriate to fabricate illumination devices as disclosed herein.

As one skilled in the art would further appreciate, light sources used in the devices described herein can be provided in a variety of forms. The light source may be for example, a linear array of LEDs, or other form of light source such as fluorescent or incandescent lamps, electroluminescent lights and the like. In some embodiments, the light may be colored. In some embodiments, there may be more than one light source provided in the illumination device. In further embodiments, the light may be input into a light guide in a variety of configurations. The light source may be supplied with a dimmable control, on/off control, color control and the like.

Further, the illumination devices described herein are suitable for use as fixtureless lighting systems in a variety of applications for illuminating spaces inside and around a vehicle, whenever and wherever sufficient illumination with minimal direct glare is needed and space conservation is needed. The typical examples of such applications are include, but not limited to, overhead dome lighting, glove box lighting, floor lighting, map lights, mirror lights, reading lights, puddle lights, bunk lights, cabin lights, ambient lights, cuddy lights, decorative lights, and the like.

The illumination devices described herein are suitable for use on any surface of a vehicle traditionally provided with lighting such as overhead dome lighting, glove box lighting, floor lighting, map lights, mirror lights, decorative lights, and the like. In addition, the illumination devices described herein are suitable for providing lighting in places where prior art lighting systems would be difficult or impractical. Due to the thin construction of the devices and the configuration of the light source (e.g., side lighting) the illumination devices of the present invention may be installed in confined spaces.

As one skilled in the art may appreciate, there are a variety of combinations of the components described herein that would be suitable to provide suitable illumination devices.

### Examples

The following abbreviations were used in the examples:
LL1: 12- high intensity white light emitting diodes (LEDs), commercially available under the trade designation "TG White Hi LED, Part Number E1S42-AW0C6-03 Bin B6" from Toyoda Gosei North America, Troy, Michigan, and 6 high intensity yellow LEDs commercially available under the trade designation "LED Yellow 594 nm CLR 4-PLCC SMD, Model Number LY E67B U2AA-26-1" from Osram OptoSemiconductor GmbH, Regensburg, Germany, were bonded in a linear array to a printed circuit board (12.7 cm x 6mm) wherein the yellow LEDs were sequentially spaced between two white LEDs.
LL2: A linear array of 18 high intensity red light emitting diodes (LEDs), commercially available under the trade designation LED Red 645 nm 4-PLCC SMD model number LS E67B-T2V1-1-1 from Osram OptoSemiconductor, equally spaced and bonded to a printed circuit board (12.7 cm x 6mm).
LG1: A wedge-shaped PMMA light guide, 7.6 cm x 11.4 cm, one smooth, light output side, and an opposing, light re-directing side comprising an array of uniformly distributed microreplicated elongated parallel prisms, made according to the method described in U.S. Patent No. 6,379,016 (Boyd et al.). The proximal, i.e., the propagation end of the light guide, was 3 mm, and the distal end was 1.0 mm.

### Example 1

A light assembly was made as follows. Light source LL1 was secured to the one end of a 7.6 cm x 12.7 cm x 6 mm open faced plastic housing. A sheet of opaque white polyester film was placed on the bottom face of the housing. Light guide LG1 was placed, proximal edge adjacent to the LEDs and the light re-directing side facing the white polyester sheet. A 5 mil. (127 micrometers) x 7.6 cm x 12.7 cm diffuser film, commercially available under the trade designation "Lexan XL4251 Bottom Diffuser Film 0.005 White WH5A201X" from GE Polymershapes Film Division, Fairfield, Connecticut, was placed on top of the light guide. Two orthogonally crossed sheets of brightness enhancement film, commercially available under the trade name "Vikuiti BEF" (BEF) from 3M Company were then p[laced on top of the diffuser film.. The LED was illuminated using a milliamp current supply, commercially available from Hewlett Packard Company, Palo Alto, California under model number 6214.

### Example 2

Example 1 was repeated, wherein LL1 was replaced with LL2 and a sheet of enhanced specular reflector film, commercially available under the trade designation "ESR" from 3M Company, St. Paul, Minnesota, was placed on top of the upper most layer of the BEF. When the LED array is off, the light device had a reflective metallic look or mirror-like appearance. When the LED array is turned on, an essentially uniform red light emission was observed in lieu of the reflective metallic face.

### Example 3

Example 1 was repeated, wherein a printed open weave fabric, obtained under the trade name "Tan Thru" from Solar Fashion GmbH, Bandlach, Germany was placed on top of the upper most layer of the BEF. When the LED array is off, the face side of the light device maintained the fabric's printed appearance. When the LED array is turned on, an essentially uniform white light emission was observed in lieu of the fabric face.

### Example 4, not according to the invention

Example 1 was repeated, wherein a sheet of diffuser film and two sheets of BEF films were removed, and a sheet of reflective polarizer film, commercially available under the trade designation "DBEF" from 3M Company, St. Paul, Minnesota, was directly placed on top of the light guide. When the LED array is off, the light device had a glossy whitish look. When the LED array is turned on, an essentially uniform white light emission and only light emission, but no light sources was observed.

### Prophetic Examples

The light transmissive membrane may comprise reflective film made according to the methods described in U.S. Pat. Nos. 5,353,154 (Lutz et al.) and 5,684,633 (Lutz et al.). The membrane may also be a loose weave fabric, or made light transmissive by perforating minute holes (full or partial) through the medium. Techniques include laser ablation, flame ablation, chemical etching or perforation via mechanical, laser or ultrasonic methods.

The light transmissive membranes may comprise or otherwise be formed from other translucent conformable films, such as cast polyvinyl chloride films obtained under the trade designation "Scotchcal" from 3M Company. Furthermore, the film may be textured to create a diffuser, structured or microstructured or, to create other lighting effects, may be colored, or employ other optically modified films, such as multiple optical layer film obtained under the Vikuiti Brand from 3M Company

Likewise, the present invention may be prepared with other visible colors of LEDs, such as those commercially obtained under the part number "QTLT601C1T" from Fairchild Semiconductor or even LEDs emitting beyond the visible portion of the electromagnetic spectrum, such as infrared LEDs obtained under the part number "AP1608F3C" from Kingbright Corporation, City of Industry, California, or ultraviolet LEDs, obtained under the part number "SM1206UV-395-IL" from Bivar, Inc., Irvine, California.

## Claims

1. An illumination device (10) for the interior lighting of a vehicle, comprising:
a. at least one light source (12),
b. at least one light management device comprising a front light guide (20) having at least one light input face (14) through which light from the source can be supplied to the light guide, a light directing face (18), and a light output face (16) opposite the light directing face, the light output face having a light extraction layer (22) thereon, the light extraction layer having a light exit face (23) and containing buried reflective facets that extract light that is supplied from the light guide, through the light output face,
c. a cover (50) operatively adapted to form a portion of the interior surface of the vehicle, wherein the cover is arranged to cover the light exit face and to be illuminated by and to transmit light received from the light source, and
d. a brightness enhancement film (46, 48) disposed between the light exit face and the cover for redirecting and recycling light to increase a brightness of light exiting the illumination device.

2. The illumination device of claim 1, wherein the cover (50) has a metallic appearance.

3. The illumination device of claim 1 wherein the cover (50) is made of a material selected from the group consisting of mirror film, a fabric material, a textile material, a leather material, a polymer material, a faux wood grain, and leather.

4. The illumination device of claim 1 wherein the light guide (20) is wedge-shaped.

5. The illumination device of claim 1, wherein the light guide (20) is curved about a longitudinal or lateral axis.

6. A vehicle, comprising the illumination device (10) of claim 1, wherein the a cover forms a portion of an interior surface of the vehicle, thereby hiding the illumination device.

## Patentansprüche

1. Beleuchtungsvorrichtung (10) zur Innenbeleuchtung eines Fahrzeugs, aufweisend:
a. mindestens eine Lichtquelle (12),
b. mindestens eine Lichtmanagementvorrichtung, aufweisend einen vorderen Lichtleiter (20), mit mindestens einer Lichteingangsfläche (14), durch die dem Lichtleiter Licht von der Quelle zugeführt werden kann, einer Lichtlenkfläche (18) und einer Lichtausgangsfläche (16) gegenüber der Lichtlenkfläche,
wobei die Lichtausgangsfläche eine Lichtextraktionsschicht (22) daran aufweist, wobei die Lichtextraktionsschicht eine Lichtausgangsfläche (23) aufweist und eingebettete reflektierende Facetten beinhaltet, die von dem Lichtleiter zugeführtes Licht durch die Lichtausgangsfläche extrahieren,
c. eine Abdeckung (50), die funktional dazu angepasst ist, einen Abschnitt der Innenfläche des Fahrzeugs zu bilden, wobei die Abdeckung dazu angeordnet ist, die Lichtausgangsfläche abzudecken und durch von der Lichtquelle empfangenes Licht beleuchtet zu werden und dieses durch zu lassen, und
d. eine Helligkeitsverbesserungsfolie (46, 48), die zwischen der Lichtausgangsfläche und der Abdeckung zum Umlenken und Zurückführen von Licht angeordnet ist, um eine Helligkeit von Licht, das aus der Beleuchtungsvorrichtung austritt, zu erhöhen.

2. Beleuchtungsvorrichtung nach Anspruch 1, wobei die Abdeckung (50) ein metallisches Erscheinungsbild aufweist.

3. Beleuchtungsvorrichtung nach Anspruch 1, wobei die Abdeckung (50) aus einem Material gefertigt ist, das aus der Gruppe bestehend aus Spiegelfolie, einem Gewebematerial, einem Textilmaterial, einem Ledermaterial, einem Polymermaterial, einem Holzmaserungsimitat und Leder ausgewählt ist.

4. Beleuchtungsvorrichtung nach Anspruch 1, wobei der Lichtleiter (20) keilförmig ist.

5. Beleuchtungsvorrichtung nach Anspruch 1, wobei der Lichtleiter (20) um eine Längsachse oder eine seitliche Achse gekrümmt ist.

6. Fahrzeug, aufweisend die Beleuchtungsvorrichtung (10) nach Anspruch 1, wobei die eine Abdeckung einen Abschnitt einer Innenfläche des Fahrzeugs bildet und dabei die Beleuchtungsvorrichtung verbirgt.

## Revendications

1. Dispositif d'éclairage (10) pour l'éclairage intérieur d'un véhicule, comprenant :
a. au moins une source de lumière (12),
b. au moins un dispositif de gestion de lumière comprenant un guide de lumière avant (20) possédant au moins une face d'entrée de lumière (14) à travers laquelle la lumière provenant de la source peut être fournie au guide de lumière, une face d'orientation de lumière (18) et une face d'émission de lumière (16) opposée à la face d'orientation de lumière,
la face de sortie de lumière possédant une couche d'extraction de lumière (22) sur celle-ci, la couche d'extraction de lumière possédant une face de sortie de lumière (23) et contenant des facettes réfléchissantes enfouies qui extraient la lumière qui est fournie à partir du guide de lumière, à travers la face d'émission de lumière,
c. un couvercle (50) opérationnellement conçu pour former une partie de la surface intérieure du véhicule, dans lequel le couvercle est disposé pour couvrir la face de sortie de lumière et pour être éclairé par la source lumineuse et pour transmettre la lumière reçue de celle-ci, et
d. un film d'amélioration de luminosité (46, 48) disposé entre la face de sortie de lumière et le couvercle pour rediriger et recycler la lumière de façon à augmenter une luminosité de la lumière sortant du dispositif d'éclairage.

2. Dispositif d'éclairage selon la revendication 1, dans lequel le couvercle (50) a une apparence métallique.

3. Dispositif d'éclairage selon la revendication 1, dans lequel le couvercle (50) est constitué d'un matériau choisi dans le groupe constitué d'un film miroir, un matériau en tissu, un matériau textile, un matériau en cuir, un matériau polymère, une imitation bois, et du cuir.

4. Dispositif d'éclairage selon la revendication 1, dans lequel le guide de lumière (20) est de forme biseautée.

5. Dispositif d'éclairage selon la revendication 1, dans lequel le guide de lumière (20) est courbé autour d'un axe longitudinal ou latéral.

6. Véhicule, comprenant le dispositif d'éclairage (10) selon la revendication 1, dans lequel le couvercle forme une partie d'une surface intérieure du véhicule, masquant de ce fait le dispositif d'éclairage.
